# EUROPEAN PATENT APPLICATION

(11) **EP 4 342 734 A1**
(43) Date of publication of application: **27.03.2024**
(21) Application number: 21940116.3
(22) Date of filing: 18.05.2021
(51) Int. Cl.: B60Q 1/34, B60W 40/00

(54) **CONTROL SYSTEM AND CONTROL METHOD FOR TURN SIGNAL LAMP, AND VEHICLE HAVING SAME**

(71) Applicant: Zhejiang Smart Intelligence Technology Co., Ltd., Ningbo, Zhejiang 315336 (CN)
(72) Inventor: DU, Hanbin, Hangzhou Bay New District Ningbo, Zhejiang 315336 (CN); LI, Weiqiang, Hangzhou Bay New District Ningbo, Zhejiang 315336 (CN); WANG, Kunyu, Hangzhou Bay New District Ningbo, Zhejiang 315336 (CN); LI, Junhai, Hangzhou Bay New District Ningbo, Zhejiang 315336 (CN); XU, Hua, Hangzhou Bay New District Ningbo, Zhejiang 315336 (CN)
(74) Representative: Zaboliene, Reda
(86) International application number: PCT/CN2021/094465
(87) International publication number: WO 2022/241659

(57) **Abstract**

A control system and control method for a turn signal lamp (40) and a vehicle having same. The control system for the turn signal lamp (40) comprises a road condition information collection unit (10), a vehicle information collection unit (20), a processing unit (30) and the turn signal lamp (40). The road condition information collection unit (10) collects road information, and transmits the road information to the processing unit (30). The vehicle information collection unit (20) collects a vehicle's own driving information, and transmits same to the processing unit (30). The processing unit (30) predicts the driving trajectory and turning direction of the vehicle according to the vehicle's own driving information, according to the driving trajectory and road information of the vehicle, determines a pre-turning time for the vehicle to reach a preset turning position, and compares the pre-turning time to a first preset time; and when the pre-turning time is less than the first preset time, the processing unit (30) turns on the turn signal lamp (40) corresponding to the turning direction.

## Description

### TECHNICAL FIELD

The present invention relates to the field of vehicle intelligent control technology, and in particular to a turn light control system and control method, and a vehicle having same.

### BACKGROUND

When a driver drives a vehicle to make turning or direction changing behaviors, it is necessary to control the vehicle's turn lights. This requires the driver to manually adjust an operation arm of a turn light switch to activate the turn light's signals. In specific circumstances, sometimes the driver may neglect or omit, which may result in penalties for violating traffic rules. In severe cases, it may increase the risk of causing traffic accidents.

In addition, for inexperienced drivers, controlling a turn light at the same time of controlling a steering wheel to turn is also prone to cause errors or decreased accuracy in operations of the steering wheel, leading to traffic accidents.

With increasingly strict enforcement of traffic laws and regulations and constant popularity of high-definition E-polices, failures of drivers to actively activate turn light switches during turning mean that the drivers will be deducted points and fined. For this reason, automatic turn light control systems are increasingly applied on vehicles. However, in the prior art, direction changes of drivers' heads are generally identified by cameras to determine in advance whether vehicles will turn or which direction it will turn in. Nevertheless, this model deviates from actual operating road conditions of vehicles and has a high misjudgment rate. Additionally, it is unable to clarify when to turn on and off turn lights.

### SUMMARY OF THE DISCLOSURE

### Technical problem

That is to say, current turn light control systems still have shortcomings, and a new turn light control system and control method still need to be provided.

### Technical solution

The present invention provides a turn light control system and control method, and a vehicle having same; the turn light control system can intelligently control a turn light based on traveling conditions of a vehicle, with a small error rate.

The present invention provides a turn light control system comprising a road condition information collection unit, a vehicle information collection unit, a processing unit, and a turn light; the road condition information collection unit collects road information, and transmits the road information to the processing unit; the vehicle information collection unit collects a vehicle's own traveling information, and transmits the vehicle's own traveling information to the processing unit; the processing unit predicts a traveling trace and a turning direction of the vehicle according to the vehicle's own traveling information, determines a pre-turning time for the vehicle to reach a preset turning position according to the traveling trace of the vehicle and the road information, and compares the pre-turning time with a first preset time; when the pre-turning time is less than the first preset time, the processing unit turns on the turn light corresponding to the turning direction.

Furthermore, the road condition information collection unit is a front camera module, and the vehicle information collection unit is a power steering module and a vehicle dynamic domain manager.

The present invention further provides a turn light control method, the method comprises the following steps: S1, collecting road information and a vehicle's own traveling information; S2, determining a traveling trace and a turning direction of the vehicle according to the vehicle's own traveling information, and determining a pre-turning time for the vehicle to reach a preset turning position according to the traveling trace of the vehicle and the road information; S3, comparing the pre-turning time with a first preset time, and when the pre-turning time is less than the first preset time, turning on a turn light corresponding to the turning direction.

Furthermore, the road information comprises information configured to analyze lane line positions and road traces.

Furthermore, the vehicle information comprises steering wheel rotating direction, lateral vehicle speed, and lateral acceleration information.

Furthermore, the preset turning position is a position where a front wheel of a vehicle in the turning direction reaches a lane line in this direction, or a position where a rear wheel of a vehicle in a non-turning direction crosses a lane line in the turning direction.

Furthermore, the first preset time is determined by one or more of a basic duration selected by a user, a driver's driving habit, a traveling speed in a forward direction of the vehicle, and a transverse distance between the vehicle and a lane line at a turning side.

Furthermore, after the turning on the turn light, the method further comprises: continuing collecting and analyzing the road information and the vehicle's own traveling information; when determining that a difference between an actual turning time for the vehicle to reach the preset turning position from a position where the turn light is turned on and the pre-turning time is less than a second preset time, and a continuously turning-on time of the turn light is greater than a third preset time, turning off the turn light.

The present invention further provides a vehicle, the vehicle comprises the above turn light control system.

The above description is only an overview of technical solutions of the present invention. In order that technical means of the present invention can be understood more clearly and can be implemented according to the content of the specification, and in order to make above and other purposes, features, and advantages of the present invention be more obvious and easy to understand, the following are preferred embodiments, and are explained in detail as follows in combination with the accompanying drawings.

### Advantageous effect

In the present invention, by collecting road information and a vehicle's own traveling information, a pre-turning time T for the vehicle to reach a preset turning position is determined according to the above two kinds of information; then the pre-turning time T is compared with a first preset time △T1, only when the pre-turning time T is less than △T1, a turn light is turned on. That is, when a processing unit determines that the vehicle has a turning intention, the turn light is not immediately turned on; while on a time t after a time point when turning begins, that is, on a time t=T1-△T1 (T1 is an initially predicted time for reaching a preset turning position after the vehicle has a turning intention, this time will constantly reduce along with lateral traveling of the vehicle), the turn light is turned on. This allows for a comprehensive consideration of a running time of a vehicle trace model and processing and transmission times of instructions on the vehicle. Within a period of time after the vehicle has the initial turning intention, it is possible to more accurately determine whether the vehicle has a true turning intention, prevent misjudgment caused by small angle turning of the vehicle, and take into account a subsequent traveling trace of the vehicle. Furthermore, by introducing the pre-turning time T, a vehicle speed has become a determination condition for turning on the turn light, which can prevent a situation that the turn light is turned on only after entering an adjacent lane. That is to say, the turn light control system provided by the present invention is more intelligent in controlling the turn light based on traveling conditions of the vehicle, with a smaller error rate.

### BRIEF DESCRIPTION OF THE DRAWINGS

FIG. 1 shows a system block diagram of a turn light control system provided by an embodiment of the present invention.
FIG. 2 shows a logical schematic diagram of steps of a turn light control method provided by an embodiment of the present invention.

### DETAILED DESCRIPTION

The following will explain exemplary embodiments in detail in combination with the accompanying drawings and embodiments, examples of which are shown in the accompanying drawings. When the following description refers to the accompanying drawings, unless otherwise indicated, the same number in different drawings represents the same or similar elements. The implementations described in the following exemplary embodiments do not represent all implementations consistent with the present application. On the contrary, they are only examples of devices and methods that are consistent with some aspects of the present application as detailed in the attached claims.

The terms "first", "second", "third", "fourth", and the like in the specification and claims of the present invention are intended to distinguish similar objects, but are not intended to describe a specific sequences or orders.

The present invention provides a turn light control system and control method, and a vehicle having same; the turn light control system can intelligently control a turn light based on traveling conditions of a vehicle, with a small error rate.

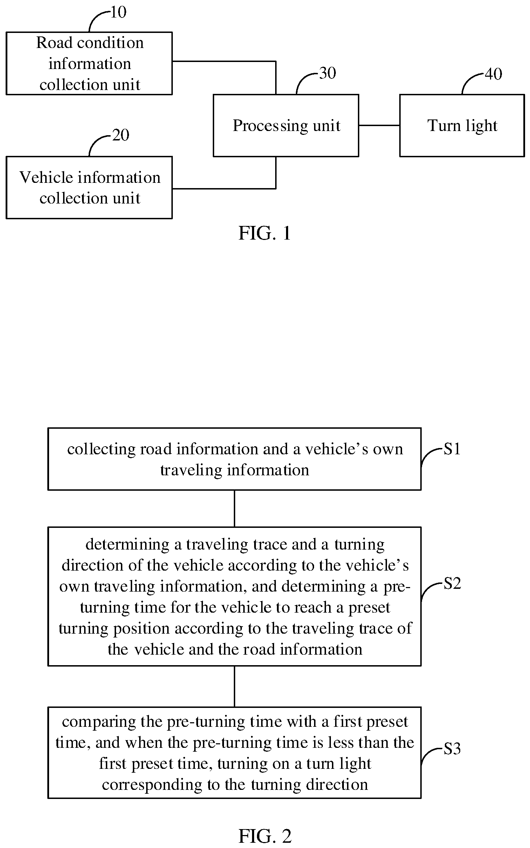

FIG. 1 shows a system block diagram of a turn light 40 control system provided by an embodiment of the present invention. As shown in FIG. 1, the turn light 40 control system provided by the embodiment of the present invention includes a road condition information collection unit 10, a vehicle information collection unit 20, a processing unit 30, and a turn light 40. The road condition information collection unit 10, the vehicle information collection unit 20, and the turn light 40 are all electrically connected to the processing unit 30. The road condition information collection unit 10 collects road information, and transmits the information to the processing unit 30; the vehicle information collection unit 20 collects a vehicle's own traveling information, and transmits the vehicle's own traveling information to the processing unit 30; the processing unit predicts a traveling trace and a turning direction of the vehicle according to the vehicle's own traveling information, determines a pre-turning time T for the vehicle to reach a preset turning position according to the traveling trace of the vehicle and the road information, and compares the pre-turning time T with a first preset time △T1; when the pre-turning time T is less than the first preset time △T1, the processing unit 30 turns on the turn light 40 corresponding to the turning direction.

In this embodiment, it is possible to determine whether the vehicle has a turning intention by whether the vehicle deviates from a forward traveling route. By collecting road information and the vehicle's own traveling information, the pre-turning time T for the vehicle to reach the preset turning position is determined according to the above two kinds of information; then the pre-turning time T is compared with the first preset time △T1, only when the pre-turning time T is less than △T1, the turn light 40 is turned on. That is, when the processing unit 30 determines that the vehicle has a turning intention, the turn light 40 is not immediately turned on; on a time t after a time point when turning begins, that is, while on a time t=T1-△T1 (T1 is an initially predicted time for reaching a preset turning position after the vehicle has a turning intention, this time will constantly reduce along with lateral traveling of the vehicle), the turn light 40 is turned on. This allows for a comprehensive consideration of a running time of a vehicle trace model and processing and transmission times of instructions on the vehicle. Within a period of time after the vehicle has the initial turning intention, it is possible to more accurately determine whether the vehicle has a true turning intention, prevent misjudgment caused by small angle turning of the vehicle, and take into account a subsequent traveling trace of the vehicle. Furthermore, by introducing the pre-turning time T, a vehicle speed has become a determination condition for turning on the turn light 40, which can prevent a situation that the turn light 40 is turned on only after entering an adjacent lane. That is to say, the turn light 40 control system provided by this embodiment of the present invention is more intelligent in controlling the turn light 40 based on traveling conditions of the vehicle, with a smaller error rate.

Furthermore, in this embodiment, the preset turning position can be a position where a front wheel of a vehicle in the turning direction reaches a lane line in this direction, and can also be a position where a rear wheel of a vehicle in a non-turning direction crosses a lane line in the turning direction, that is, the vehicle completely enters an adjacent lane.

Furthermore, in this embodiment, the road condition information collection unit 10 can be an FCM (Front Camera Module), which analyzes road information such as lane line positions, road traces, and so on through collected images. The vehicle information collection unit 20 can be a PSCM (Power Steering Control Module), a VDDM (Vehicle Dynamic Domain Manager), and so on, which obtains the pre-turning time T through the collected vehicle's own traveling information, such as the vehicle's steering wheel rotating angle, lateral vehicle speed, lateral acceleration, etc., in combination with a transverse distance between the vehicle and a lane line in a turning direction.

Furthermore, in this embodiment, the first preset time △T1 can be determined by one or more of a basic duration selected by a user, a driver's driving habit, a traveling speed in a forward direction of the vehicle, and a transverse distance between the vehicle and a lane line at a turning side. By the setting of the above influencing factors, the first preset time △T1 can be set according to users' requirements. For example, selection of multiple gear times can be provided, and it is possible to combine drivers' driving habits and traveling speeds to make the control system control the turn light 40 more accurately.

That is, in this embodiment, when the processing unit 30 determines that the vehicle has a leftward traveling trace by a steering wheel rotation angle, a predicted pre-turning time T can be obtained through a lateral speed and a lateral acceleration of the vehicle and a transverse distance between the vehicle and a lane line; when the pre-turning time T is less than the first preset time △T1, it is determined that the vehicle will enter an adjacent lane within an appropriate period of time, and thus a left turn light 40 is turned on. Similarly, if the vehicle has a rightward traveling trace and the pre-turning time T is less than the first preset time △T1, the processing unit 30 will turn on a right turn light 40; when the vehicle has a leftward or rightward traveling trace but the pre-turning time T is greater than the first preset time △T1, the vehicle will not perform the operation of turning on the turn light 40 until the pre-turning time T is less than the first preset time △T1.

Furthermore, after the turn light 40 is turned on, the processing unit 30 continues to analyze the road information collected by the road condition information collection unit 10 and the vehicle's own traveling information collected by the vehicle information collection unit 20; when it is determined that a difference between an actual turning time T1 for the vehicle to reach the preset turning position from a position where the turn light 40 needs to be turned on and the pre-turning time T is less than a second preset time △T2, and a continuously turning-on time of the turn light 40 is greater than a third preset time △T3, it is indicated that the vehicle successfully completes turning, the processing unit 30 controls the turn light 40 to be turned off, and a process of controlling the turn light 40 is completed.

FIG. 2 shows a logical schematic diagram of steps of a turn light 40 control method provided by an embodiment of the present invention. As shown in FIG. 2, the present further provides a turn light 40 control method, the method comprises the following steps.

S1, collecting road information and a vehicle's own traveling information.

In this step, the road information includes, but is not limited to, information configured to analyze lane line positions and road traces. The vehicle information includes, but is not limited to, steering wheel rotating angle, lateral vehicle speed, and lateral acceleration information.

S2, determining a traveling trace and a turning direction of the vehicle according to the vehicle's own traveling information, and determining a pre-turning time T for the vehicle to reach a preset turning position according to the traveling trace of the vehicle and the road information.

In this step, the preset turning position can be a position where a front wheel of a vehicle in the turning direction reaches a lane line in this direction, and can also be a position where a rear wheel of a vehicle in a non-turning direction crosses a lane line in the turning direction, that is, the vehicle completely enters an adjacent lane.

S3, comparing the pre-turning time T with a first preset time △T1, and when the pre-turning time T is less than the first preset time △T1, turning on a turn light 40 corresponding to the turning direction.

In this step, the first preset time △T1 can be determined by one or more of a basic duration selected by a user, a driver's driving habit, a traveling speed in a forward direction of the vehicle, and a transverse distance between the vehicle and a lane line at a turning side.

After the turning on the turn light 40, the method further includes: continuing collecting and analyzing the road information and the vehicle's own traveling information; when determining that a difference between an actual turning time T1 for the vehicle to reach the preset turning position from a position where the turn light 40 is turned on and the pre-turning time T is less than a second preset time △T2, and a continuously turning-on time of the turn light 40 is greater than a third preset time △T3, turning off the turn light 40.

In summary, in the present invention, by collecting road information and a vehicle's own traveling information, a pre-turning time T for the vehicle to reach a preset turning position is determined according to the above two kinds of information; then the pre-turning time T is compared with a first preset time △T1, only when the pre-turning time T is less than △T1, a turn light 40 is turned on. That is, when a processing unit 30 determines that the vehicle has a turning intention, the turn light 40 is not immediately turned on; while on a time t after a time point when turning begins, that is, on a time t=T1-△T1 (T1 is an initially predicted time for reaching a preset turning position after the vehicle has a turning intention, this time will constantly reduce along with lateral traveling of the vehicle), the turn light 40 is turned on. This allows for a comprehensive consideration of a running time of a vehicle trace model and processing and transmission times of instructions on the vehicle. Within a period of time after the vehicle has the initial turning intention, it is possible to more accurately determine whether the vehicle has a true turning intention, prevent misjudgment caused by small angle turning of the vehicle, and take into account a subsequent traveling trace of the vehicle. Furthermore, by introducing the pre-turning time T, a vehicle speed has become a determination condition for turning on the turn light 40, which can prevent a situation that the turn light 40 is turned on only after entering an adjacent lane. That is to say, the turn light 40 control system provided by the present invention is more intelligent in controlling the turn light 40 based on traveling conditions of the vehicle, with a smaller error rate.

The present invention further provides a vehicle, the vehicle includes the above turn light 40 control system. Regarding other technical features of the vehicle, please refer to the prior art and they will not be elaborated here.

The above described are only preferred embodiments of the present invention and does not make any form of limitation to the present invention. Although the present invention has been disclosed above as the preferred embodiments, they are not intended to limit the present invention. Any skilled person familiar with the profession may make some changes using the technical content disclosed above or modify them into equivalent embodiments with equivalent changes with deviating from the scope of the technical solution of the present invention. Any simple modification, equivalent change, and decoration made to the above embodiments based on the technical essence of the present invention without departing from the content of the technical solution of the present invention should still fall within the scope of the technical solution of the present invention.

## Claims

1. A turn light control system comprising a road condition information collection unit, a vehicle information collection unit, a processing unit, and a turn light; wherein the road condition information collection unit collects road information, and transmits the road information to the processing unit; the vehicle information collection unit collects a vehicle's own traveling information, and transmits the vehicle's own traveling information to the processing unit; the processing unit predicts a traveling trace and a turning direction of the vehicle according to the vehicle's own traveling information, determines a pre-turning time for the vehicle to reach a preset turning position according to the traveling trace of the vehicle and the road information, and compares the pre-turning time with a first preset time; when the pre-turning time is less than the first preset time, the processing unit turns on the turn light corresponding to the turning direction.

2. The turn light control system according to claim 1, wherein the road condition information collection unit is a front camera module, and the vehicle information collection unit is a power steering module and a vehicle dynamic domain manager.

3. A turn light control method comprising the following steps:
S1, collecting road information and a vehicle's own traveling information;
S2, determining a traveling trace and a turning direction of the vehicle according to the vehicle's own traveling information, and determining a pre-turning time for the vehicle to reach a preset turning position according to the traveling trace of the vehicle and the road information;
S3, comparing the pre-turning time with a first preset time, and when the pre-turning time is less than the first preset time, turning on a turn light corresponding to the turning direction.

4. The turn light control method according to claim 3, wherein the road information comprises information configured to analyze lane line positions and road traces.

5. The turn light control method according to claim 3, wherein the vehicle information comprises steering wheel rotating direction, lateral vehicle speed, and lateral acceleration information.

6. The turn light control method according to claim 3, wherein the preset turning position is a position where a front wheel of a vehicle in the turning direction reaches a lane line in this direction, or a position where a rear wheel of a vehicle in a non-turning direction crosses a lane line in the turning direction.

7. The turn light control method according to claim 3, wherein the first preset time is determined by one or more of a basic duration selected by a user, a driver's driving habit, a traveling speed in a forward direction of the vehicle, and a transverse distance between the vehicle and a lane line at a turning side.

8. The turn light control method according to claim 3, wherein after the turning on the turn light, the method further comprises: continuing collecting and analyzing the road information and the vehicle's own traveling information; when determining that a difference between an actual turning time for the vehicle to reach the preset turning position from a position where the turn light is turned on and the pre-turning time is less than a second preset time, and a continuously turning-on time of the turn light is greater than a third preset time, turning off the turn light.

9. A vehicle comprising the turn light control system according to any one of claims 1-2.
